# FASCICULE DE BREVET EUROPEEN

(11) **EP 3 729 604 B1**
(45) Date de publication et mention de la délivrance du brevet: **21.02.2024**
(21) Numéro de dépôt: 18811449.0
(22) Date de dépôt: 09.11.2018
(51) Int. Cl.: H02K 1/18, H02K 5/04, H02K 1/2733, H02K 15/02, H02K 15/14, B63H 5/125

(54) **ENSEMBLE COMPRENANT UN BOÎTIER ET UN STATOR INSÉRÉ À L'INTÉRIEUR DUDIT BOÎTIER**
ANORDNUNG MIT EINEM GEHÄUSE UND EINEM IN DAS GEHÄUSE EINGESETZTEN STATOR
ASSEMBLY COMPRISING A HOUSING AND A STATOR INSERTED INSIDE SAID HOUSING

(30) Priorité: 22.12.2017 FR 1763022
(43) Date de publication de la demande: 28.10.2020
(73) Titulaire: AETC SAPPHIRE, Saint Petersburg 191014 (RU)
(72) Inventeur: JULLIAND, Lionel, 90000 Belfort (FR); ROCHE, Fabien, 54250 Champigneulles (FR); HUMBERT, Pierre, 54250 Champigneulles (FR); HEMMELMANN, Jan, 85748 Garching Bei München (DE)
(74) Mandataire: Casalonga
(86) Numéro de dépôt international: PCT/EP2018/080726
(87) Numéro de publication internationale: WO 2019/120742

(56) Documents cités:
- EP-A2- 0 911 948
- EP-A2- 1 320 173
- US-A- 3 708 707
- US-A- 4 634 909
- US-A1- 2005 236 924
- US-A1- 2016 285 342

## Description

La présente invention concerne un ensemble comprenant un boîtier creux et un stator inséré à l'intérieur dudit boîtier, et plus particulièrement un tel ensemble destiné à être incorporé dans un propulseur en nacelle.

Dans de nombreuses applications, il est nécessaire de réaliser un ensemble solidaire comprenant un boîtier et un stator inséré à l'intérieur du boîtier.

Par exemple, dans des véhicules marins tels que les navires, les sous-marins ou les plates-formes pétrolières, un propulseur en nacelle comprend de manière classique un moteur électrique. Le moteur électrique comporte notamment un rotor monté rotatif par rapport à un stator. Le stator forme un ensemble solidaire avec un boîtier du propulseur en nacelle.

De manière classique, pour réaliser un tel ensemble solidaire, on chauffe un boîtier comprenant une cavité cylindrique de sorte à entraîner l'augmentation du volume de la cavité cylindrique. On insère le stator à l'intérieur de la cavité du boîtier. Lors du refroidissement du boîtier, le stator est fretté dans la cavité et rendu solidaire du boîtier.

De tels ensembles solidaires présentent toutefois l'inconvénient de ne pas être démontables.

Par ailleurs, dans beaucoup d'applications, le boîtier est susceptible d'être soumis à des chocs importants. Par exemple, un boîtier destiné à un propulseur en nacelle de navire brise-glace est susceptible d'entrer fréquemment en contact avec des blocs de glace. Il en résulte l'apparition de déformations et de vibrations importantes sur le boîtier. Ces déformations et/ou ces vibrations sont transmises au stator fretté à l'intérieur du boîtier. Les déformations et/ou les vibrations du stator qui en résultent peuvent conduire à une défaillance du moteur électrique.

On peut également se référer aux documents US 3 708 707, US 2005/236924) et US 4 634 909 qui proposent une fixation par clavette d'un stator dans un logement.

Au vu de ce qui précède, l'invention a pour but de permettre la réalisation d'un ensemble solidaire comprenant un boîtier et un stator, facile à monter, démontable et dans lequel l'impact des chocs sur le boîtier engendre le moins possible de déformations et de vibrations sur le stator.

À cet effet, il est proposé un ensemble comprenant un boîtier et un stator inséré à l'intérieur d'une cavité cylindrique dudit boîtier, selon la revendication 1.

Grâce à de tels moyens de fixation ponctuels, il est possible de disposer les moyens de fixation dans des zones de déformation minimale du boîtier. On minimise ainsi la transmission des déformations et/ou des vibrations du boîtier au stator. On préserve ainsi au maximum le stator de sorte à limiter le risque d'une défaillance du stator à la suite d'un choc particulièrement fort ou d'une répétition de chocs.

La présente invention est tout particulièrement avantageuse lorsque l'ensemble est destiné à être incorporé dans un propulseur en nacelle de véhicule marin. En effet, dans une telle application, les boîtiers de propulseur sont particulièrement soumis à des chocs sur les faces latérales tendant à donner au boitier une forme ovale. Dans ce cas, quatre zones se déforment faiblement et constituent des zones idéales pour y incorporer un moyen de fixation ponctuel. Toutefois, on gardera à l'esprit que l'invention peut s'appliquer à d'autres domaines d'application.

De manière avantageuse, ledit moyen de fixation ponctuel est apte à mettre en oeuvre un effort de maintien dirigé selon la direction radiale et/ou un effort de maintien dirigé selon la direction tangentielle.

La mise en oeuvre de ces efforts de maintien peut aisément être assurée par un même moyen de fixation ponctuelle. Sauf indication contraire, les termes « axial », « radial » et « tangentiel » doivent être compris comme se référant à un axe de cylindricité du stator.

Dans un mode de réalisation, l'ensemble comprend en outre un premier plan de symétrie, ledit moyen de fixation ponctuel étant localisé dans un secteur angulaire formant un angle compris entre 0 ° et 40 ° avec ledit premier plan de symétrie ou dans un secteur angulaire formant un angle compris entre 140 ° et 180 ° avec ledit premier plan de symétrie.

De tels secteurs angulaires correspondent à des zones de déformation minimale lorsque le boîtier est atteint par des chocs se produisant sur ses surfaces latérales. En choisissant de tels secteurs angulaires, on minimise ainsi la transmission des déformations et/ou des vibrations du boîtier sur le stator. Un tel ensemble est donc particulièrement adapté pour être incorporé dans des propulseurs en nacelle destinés à des navires brise glace.

On peut également prévoir au moins un boulon de pression localisé dans un secteur angulaire formant un angle compris entre 1,5 ° et 6,5 ° avec ledit premier plan de symétrie, et au moins une surface de pression localisée dans un secteur angulaire formant un angle compris entre 155 ° et 180 ° avec ledit premier plan de symétrie.

Ce boulon de pression et cette surface de pression permettent d'augmenter la robustesse de l'effort de maintien dirigé selon la direction radiale. Par ailleurs, leur localisation dans les secteurs angulaires précités permet de faciliter l'accès d'un opérateur aux boulons de pression.

Dans un mode de réalisation, le stator comprend deux brides d'extrémité respectivement situées aux deux extrémités axiales du stator, ledit ensemble comprenant, pour chaque bride d'extrémité du stator, un premier moyen de fixation ponctuel localisé dans un secteur angulaire formant un angle compris entre 0 ° et 40 ° avec ledit premier plan de symétrie, un deuxième moyen de fixation ponctuel localisé pour être le symétrique du premier moyen de fixation ponctuel par rapport au premier plan de symétrie, un troisième moyen de fixation ponctuel localisé dans un secteur angulaire formant un angle compris entre 140 ° et 180 ° avec ledit premier plan de symétrie, et un quatrième moyen de fixation ponctuel localisé pour être le symétrique du troisième moyen de fixation ponctuel par rapport au premier plan de symétrie.

Dans un tel mode de réalisation, la liaison d'encastrement entre le boîtier et le stator est rendue robuste tout en minimisant la transmission des déformations et/ou des vibrations du boîtier au stator. Par ailleurs, il est possible de ventiler le stator du fait de la faible surface du stator en contact avec le boîtier. En outre, les moyens de fixation ponctuels situés au niveau d'une bride à une extrémité axiale du stator sont rendus faciles d'accès.

Le stator comprend au moins une bride intermédiaire axialement située entre les brides d'extrémité, ledit ensemble comprenant, pour chaque bride intermédiaire du stator, un premier moyen de fixation ponctuel localisé dans un secteur angulaire formant un angle compris entre 0 ° et 40 ° avec ledit premier plan de symétrie et un deuxième moyen de fixation ponctuel localisé pour être le symétrique du premier moyen de fixation ponctuel par rapport au premier plan de symétrie.

De ce fait, on renforce encore davantage la robustesse de la liaison d'encastrement entre le boîtier et le stator. Du fait que seuls deux moyens de fixation ponctuels sont prévus pour chaque bride intermédiaire, on facilite l'accès à ces moyens de fixation ponctuels.

Dans un mode de réalisation selon l'invention, ledit moyen de fixation ponctuel comprend un corps principal et un système de cale biaise apte à solidariser de manière sélective le corps principal avec le boîtier et avec le stator.

Un tel moyen de fixation peut facilement être mis en place ou démonté, ou encore resserré. On facilite ainsi la mise en place, la suppression ou le réglage de la liaison d'encastrement du boîtier et du stator.

Dans un mode de réalisation selon l'invention, ledit corps principal comprend une platine et une pièce à section trapézoïdale, ledit moyen de fixation ponctuel comprenant deux paires de cales biaises respectivement situées de part et d'autre d'un second plan de symétrie du corps principal, chaque cale biaise étant apte à se déplacer en translation par rapport au corps principal selon une première direction perpendiculaire au plan de la platine, la surface inclinée de chaque cale biaise coopérant avec une surface inclinée de la pièce à section trapézoïdale de telle sorte que le déplacement en translation selon la première direction de ladite cale biaise par rapport au corps principal dans un sens tendant à éloigner ladite cale biaise de la platine occasionne un déplacement de la cale biaise en translation par rapport au corps principal selon une seconde direction perpendiculaire au second plan de symétrie dans un sens tendant à l'éloigner du second plan de symétrie.

De manière avantageuse, pour chaque cale biaise, le déplacement de ladite cale biaise par rapport au corps principal est mis en oeuvre au moyen d'une vis de serrage respective.

Selon un autre aspect, il est proposé un procédé selon la revendication 8 dans lequel on simule la déformation du boitier d'un ensemble tel que défini précédemment, ladite simulation étant mise en oeuvre au moyen d'un modèle par éléments finis, l'on détermine au moins une localisation de déformation minimale du boîtier cylindrique, et l'on place le moyen de fixation ponctuel à ladite localisation de déformation minimale.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue en perspective d'un ensemble selon l'invention,
- les figures 2, 3 et 4 sont respectivement trois vues en coupe de l'ensemble de la figure 1,
- les figures 5 et 6 sont deux vues de détail de la figure 4,
- la figure 7 est une vue en perspective d'un moyen de fixation ponctuel de l'ensemble des figures 1 à 6,
- la figure 8 est une vue de face du moyen de fixation de la figure 7, et
- la figure 9 est une vue en coupe selon le plan de coupe IX-IX du moyen de fixation des figures 7 et 8.

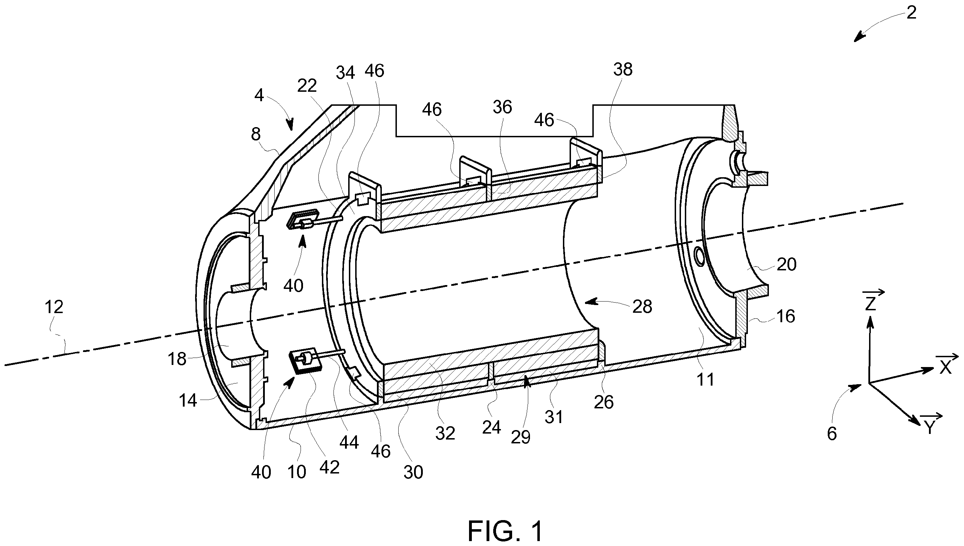

Il est schématiquement représenté sur les figures 1 à 4 un propulseur en nacelle 2. Le propulseur 2 est destiné à être incorporé sur un véhicule marin (non représenté) tel qu'un navire, un sous-marin ou une plate-forme pétrolière. Les propulseurs en nacelle sont également connus sous la dénomination anglo-saxonne « propulsion oriented drive », ou sous l'acronyme correspondant « POD ».

Le propulseur 2 comporte notamment un boîtier 4 représenté en coupe radiale sur la figure 1. On définit une base vectorielle orthonormale 6 attachée au boîtier 4. La base 6 est constituée d'un vecteur *x̅,* d'un vecteur *̅y̅*̅ et d'un vecteur *̅z̅*̅. Lorsque le propulseur est normalement incorporé sur un véhicule marin tel qu'un navire en cale sèche, le plan formé par les vecteurs *̅x̅*̅ et *̅y̅*̅ est horizontal, le vecteur z̅ étant orienté du bas vers le haut. Sauf indication contraire, les termes « supérieur » et « inférieur » seront compris dans la présente demande comme étant définis par rapport à la direction et au sens du vecteur *̅z̅*̅.

Le boîtier 4 est symétrique par rapport au plan de coupe I-I de la figure 1. Le plan I-I est le plan perpendiculaire au vecteur *̅y̅*̅ contenant l'axe 12. Dans un souci de clarté de la figure 1, seule la moitié du boîtier 4 a donc été représentée, l'autre moitié pouvant être déduite par symétrie par rapport au plan I-I.

Comme illustré sur la figure 1, le boîtier 4 est notamment constitué d'une portion supérieure de raccordement 8 et d'une portion cylindrique 10. La portion 8 est raccordée à une pièce du véhicule marin, par exemple à la coque d'un navire. Plus précisément, la portion 8 peut être solidaire d'une bague d'un palier de gouverne (non représenté), l'autre bague du palier de gouverne étant solidaire de la coque du navire.

La portion 10 est axisymétrique autour d'un axe 12 parallèle au vecteur *̅x̅*̅. La portion 10 est radialement délimitée par une paroi cylindrique (non référencée) comprenant une surface intérieure 11. La surface intérieure 11 délimite une cavité cylindrique (non référencée) autour de l'axe 12. La portion 10 est axialement délimitée par une première paroi frontale 14 et par une seconde paroi frontale 16. Chaque paroi frontale 14, 16 comprend respectivement un alésage cylindrique 18, 20. Les alésages 18 et 20 sont coaxiaux autour de l'axe 12.

Les alésages 18 et 20 sont prévus pour recevoir un arbre de propulsion (non représenté). L'arbre supporte un moyen de propulsion pouvant notamment être une hélice (non représentée) ou un rotor de pompe (non représenté).

Le boîtier 4 comporte trois brides annulaires 22, 24 et 26. Les brides 22, 24 et 26 sont sensiblement identiques et s'étendent radialement vers l'intérieur depuis la surface 11. Le décalage axial entre les brides 22 et 24 est sensiblement égal au décalage axial entre les brides 24 et 26.

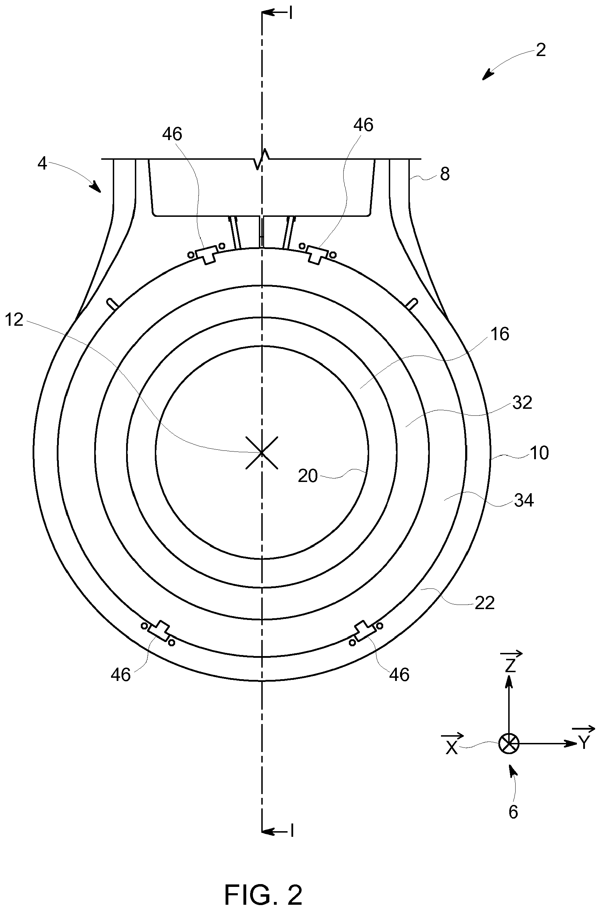

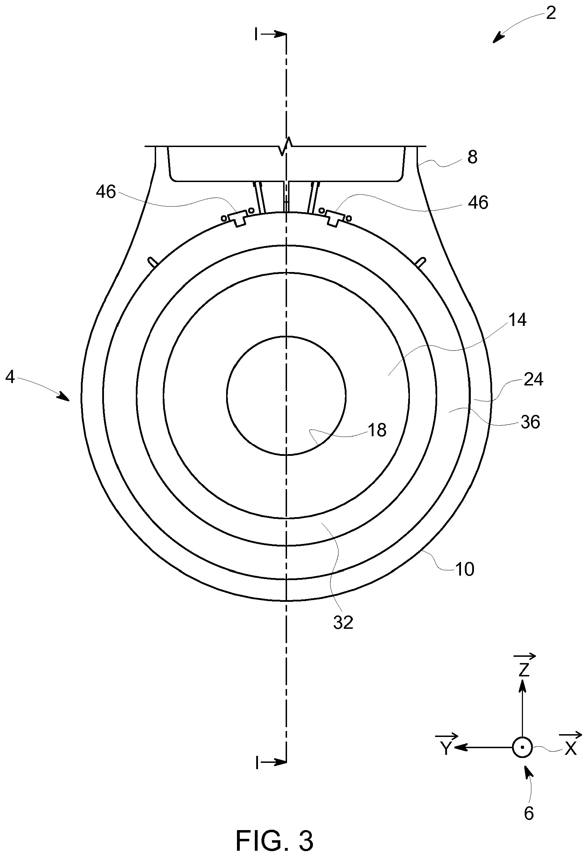

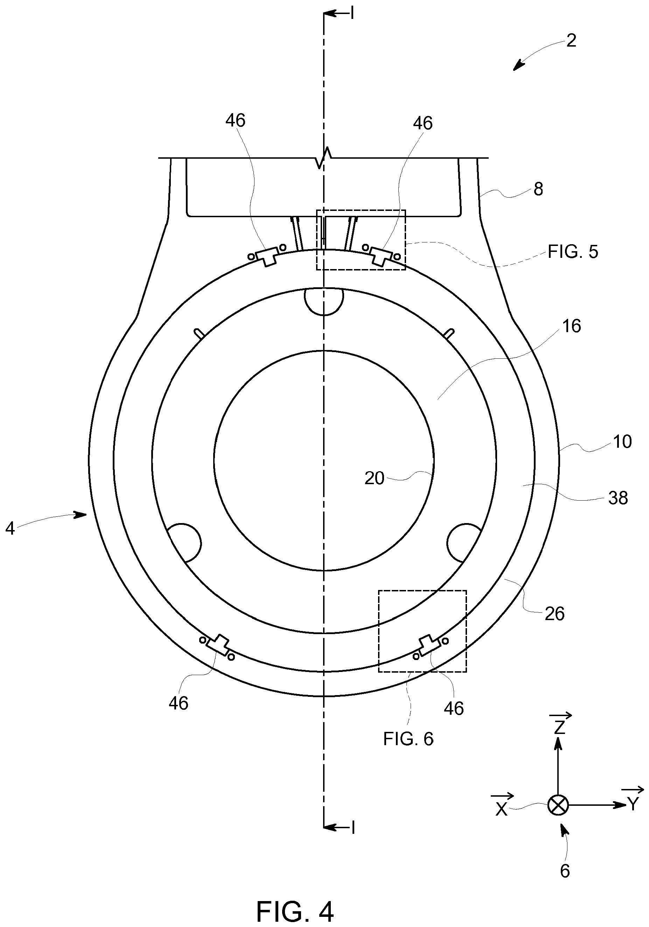

On a schématiquement représenté sur les figures 2, 3 et 4 des vues en coupe du propulseur 2. Le plan de coupe de la figure 2 est le plan perpendiculaire au vecteur *̅x̅*̅ contenant la bride 22. Le plan de coupe de la figure 3 est le plan perpendiculaire au vecteur *̅x̅*̅ contenant la bride 24. Le plan de coupe de la figure 4 est le plan perpendiculaire au vecteur *̅x̅*̅ contenant la bride 26.

Le propulseur 2 comporte un moteur électrique 28. Le moteur 28 est prévu pour entraîner en rotation l'arbre de propulsion par rapport au boîtier 4. Le moteur 28 comporte un stator 29 et un rotor 32. Le stator 29 et le rotor 32 sont coaxiaux autour de l'axe 12. De manière classique en soi, le stator 29 et le rotor 32 comprennent des enroulements en matériau électriquement conducteur permettant de générer un effort électromagnétique entraînant le déplacement en rotation du rotor 32 par rapport au stator 29 autour de l'axe 12. Dans l'exemple illustré, les enroulements constituant le rotor 29 et le stator 32 sont imprégnés dans une matrice par un procédé d'imprégnation sous vide et sous pression. Ce procédé est également connu sous la dénomination anglo-saxonne « vacuum pressure imprégnation », ou sous l'acronyme correspondant « VPI ».

Plus particulièrement, dans l'exemple illustré, le stator 29 comprend notamment une première portion 30 et une seconde portion 31. Les première et seconde portions 30 et 31 sont sensiblement identiques, coaxiales autour de l'axe 12.

Le stator 29 comporte une première bride d'extrémité 34, une bride intermédiaire 36 et une deuxième bride d'extrémité 38. Les brides 34, 36 et 38 sont sensiblement identiques. La bride 36 est axialement disposée entre les portions 30 et 31. La bride 34 est disposée à une extrémité axiale du stator 29 adjacente à la portion 30. La bride 38 est disposée à une extrémité axiale du stator 29 adjacente à la portion 31. Les brides 34, 36 et 38 sont respectivement visibles sur les figures 2, 3 et 4.

Selon l'invention, le boîtier 4 et le stator 29 constituent un ensemble solidaire (E). Il va maintenant être décrit les moyens permettant de réaliser un ensemble solidaire comprenant notamment le boîtier 4 et le stator 29.

Le propulseur 2 comprend quatre moyens d'arrêt axial 40. En l'espèce, deux moyens d'arrêt axial 40 sont visibles sur la vue en coupe de la figure 1. Chaque moyen 40 se compose d'une platine 42 fixée à la surface 11. La platine 42 est solidaire d'une tige 44 en contact axial avec la bride 34. Les quatre moyens 40 sont conçus de manière à pouvoir supporter un effort axial maximal de 125 tonnes, ou 1250 N. De cette manière, l'effort axial tendant à déplacer le stator 29 dans le sens opposé à celui du vecteur *̅x̅*̅, résultant de l'action du moyen de propulsion sur l'eau, est empêché par les quatre moyens 40.

Afin d'assurer le verrouillage selon la direction radiale et selon la direction tangentielle de l'ensemble solidaire, il est prévu dix moyens de fixation ponctuels 46. En l'espèce, quatre moyens 46 sont radialement placés entre les brides 22 et 34, deux moyens 46 sont radialement placés entre les brides 24 et 36 et quatre moyens 46 sont radialement placés entre les brides 26 et 38. Le fonctionnement des moyens 46 est détaillé davantage par la suite.

Comme illustré sur les figures 2 à 5, le propulseur 2 comporte en outre six alésages radiaux 48. Les alésages 48 reçoivent un boulon de pression 50. Pour chaque bride 22, 24 et 26, il est prévu deux alésages 48 et deux boulons 50. Chaque boulon 50 peut être déplacé radialement par rapport au boîtier 4 de manière à exercer un effort radial sur l'une des brides 34, 36 et 38.

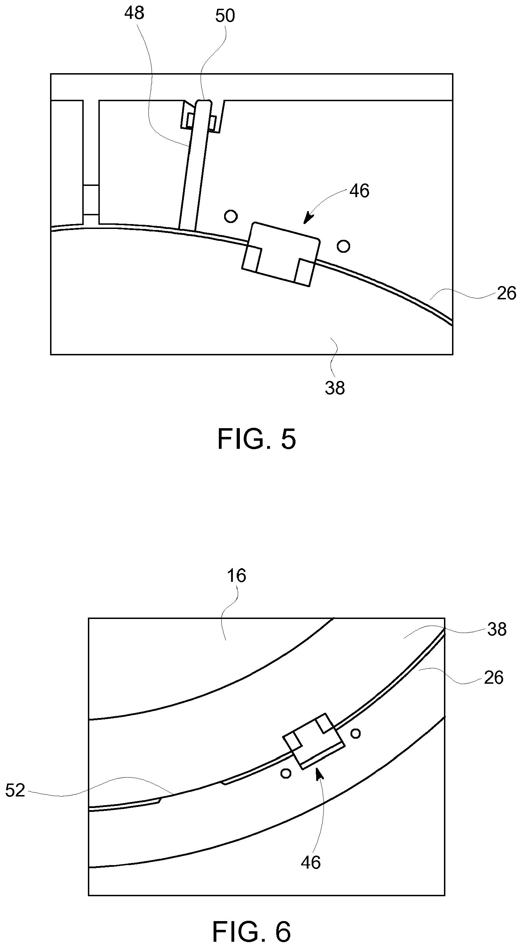

Comme illustré sur la figure 6, la bride 26 comporte une surface de pression 52. La surface 52 consiste en une protubérance s'étendant en saillie radiale vers l'intérieur depuis la surface cylindrique intérieure de la bride 26. Du fait de la faible épaisseur de la protubérance constituant la surface 52, les surfaces de pression 52 des brides 22 et 24 ne sont pas visibles sur les figures 1 à 4. Toutefois, la bride 22 comprend deux surfaces de pression 52 identiques aux surfaces 52 de la figure 6 et situées en regard des deux alésages 48 respectifs. De même, la bride 24 comprend deux surfaces de pression 52 elles aussi identiques aux surfaces 52 des brides 22 et 26.

Comme visible sur les figures 2 à 4, les moyens 46 situés dans une moitié supérieure de la portion 10 sont respectivement localisés dans un secteur angulaire orienté compris entre 0 ° et 40 °, et dans un secteur angulaire orienté compris entre 0 ° et -40 °, autour de l'axe 12 en considérant que le vecteur *̅z̅*̅ correspond à l'angle nul. De préférence, ces moyens 46 sont respectivement situés dans un secteur angulaire orienté compris entre 5 ° et 30 ° et dans un secteur angulaire orienté compris entre -5 ° et -30 °. De manière encore plus préférentielle, ces moyens 46 sont respectivement situés dans un secteur angulaire orienté compris entre 8 ° et 20 ° et dans un secteur angulaire orienté compris entre -8 ° et -20 °. Les moyens 46 situés dans la partie inférieure de la portion 10 sont localisés respectivement localisées dans un secteur angulaire orienté compris entre 140 ° et 180 °, et dans un secteur angulaire orienté compris entre 180 ° et 220 °, autour de l'axe 12 en considérant que le vecteur *̅z̅*̅ correspond à l'angle nul. De préférence, ces moyens 46 sont respectivement situés dans un secteur angulaire orienté compris entre 140 ° et 166 ° et dans un secteur angulaire orienté compris entre 194 ° et 220 °. De manière encore plus préférentielle, ces moyens 46 sont respectivement situés dans un secteur angulaire orienté compris entre 145 ° et 162 ° et dans un secteur angulaire orienté compris entre 198 ° et 215 °. Plus précisément, chaque moyen 46 est reçu dans une rainure pratiquée dans la bride 22, 24 ou 26 correspondante. Cette rainure s'étend radialement vers l'extérieur depuis la surface cylindrique intérieure de ladite bride 22, 24 ou 26. Ledit moyen 46 est également reçu dans une rainure pratiquée dans la bride 34, 36 ou 38 correspondante. Cette rainure s'étend radialement vers l'intérieur depuis la surface cylindrique extérieure de ladite bride 34, 36 ou 38.

Pour chaque bride 22, 24 ou 26, un orifice 48 et un boulon 50 sont situés dans un secteur angulaire orienté compris entre 1,5 ° et 6,5 °, autour de l'axe 12 en considérant que le vecteur *̅z̅*̅ correspond à l'angle nul, et un orifice 48 et un boulon 50 sont situés dans un secteur angulaire orienté compris entre -1,5 ° et -6,5 °, autour de l'axe 12 en considérant que le vecteur *̅z̅*̅ correspond à l'angle nul. De préférence, les couples constitués d'un orifice 48 et d'un boulon 50 sont respectivement situés dans un secteur angulaire orienté compris entre 3 ° et 5 ° et dans un secteur angulaire orienté compris entre -3 ° et - 5 °.

Pour chaque bride 22, 24 ou 26, une surface de pression 52 est située dans un secteur angulaire orienté compris entre 155 ° et 180 °, autour de l'axe 12 en considérant que le vecteur *̅z̅*̅ correspond à l'angle nul, et une surface de pression est située dans un secteur angulaire orienté compris entre 180 ° et 205 °, autour de l'axe 12 en considérant que le vecteur *̅z̅*̅ correspond à l'angle nul. De préférence, les surfaces de pression 52 sont respectivement situées dans un secteur angulaire orienté compris entre 160 ° et 172 ° et dans un secteur angulaire orienté compris entre 188 ° et 200 °.

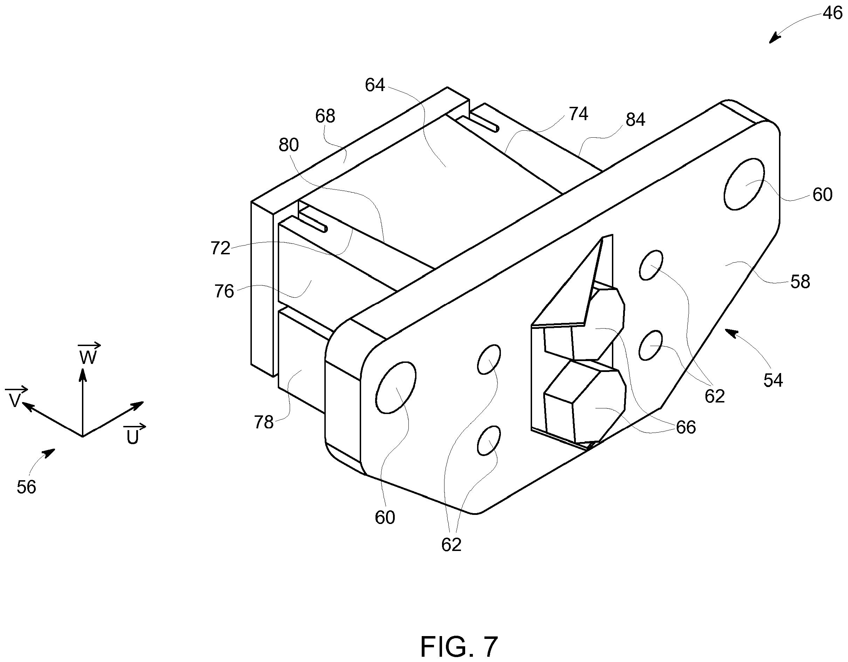

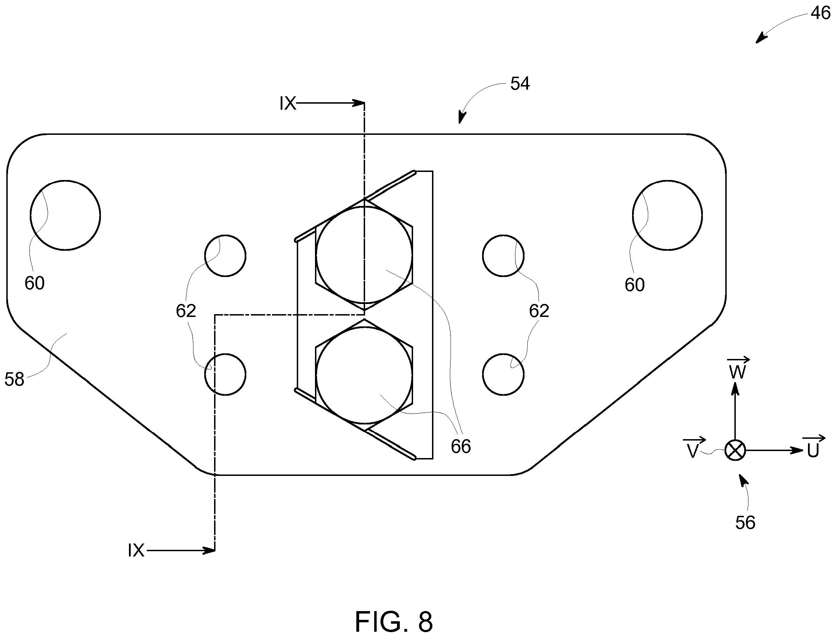

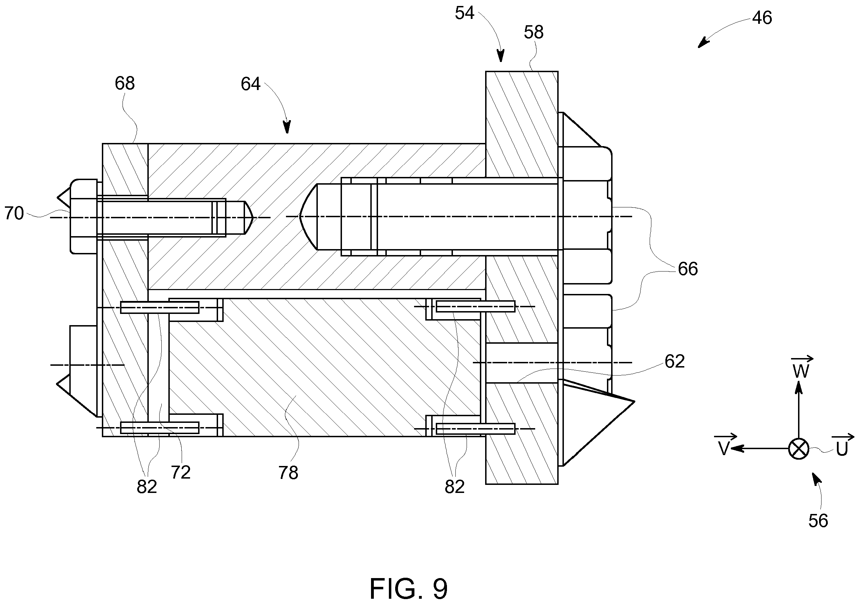

En référence aux figures 7 à 9, on va maintenant détailler un moyen de fixation ponctuel 46. Dans un souci de clarté de la description, on suppose que le moyen 46 représenté sur les figures 7 à 9 correspond à un des moyens 46 radialement incorporés entre la bride 26 et la bride 38.

Le moyen 46 comprend un corps principal 54. On définit une base vectorielle orthonormale 56 attachée au corps 54. La base 56 est constituée d'un vecteur *̅u̅*̅, d'un vecteur *̅v̅*̅ et d'un vecteur *̅w̅*̅. Le corps 54 admet un plan de symétrie P_{symétrie} perpendiculaire au vecteur *̅u̅*̅.

Le corps 54 comprend notamment une platine 58 perpendiculaire au vecteur *̅v̅*̅. La platine 58 comprend deux perçages traversant 60. Les perçages 60 sont cylindriques autour de la direction du vecteur *̅v̅*̅. Les perçages 60 sont de même diamètre. La platine 58 comprend quatre perçages débouchant 62 cylindriques autour de la direction du vecteur *̅v̅*̅. Les perçages 62 sont de même diamètre plus petit que celui les perçages 60. Les perçages traversant 62 comprennent un taraudage intérieur.

Le corps principal 54 comporte en outre une pièce à section trapézoïdale 64. La section de la pièce 64 selon un plan de coupe perpendiculaire au vecteur *̅w̅*̅ est un trapèze dont le petit côté est adjacent à la platine 58 et le grand côté est opposé à la platine 58. En d'autres termes, par rapport à la direction du vecteur *̅v̅*̅, la pièce 64 est délimitée par une petite face rectangulaire (non référencée) et par une grande face rectangulaire (non référencée). La pièce 64 et maintenue en contact par sa petite face rectangulaire avec la platine 58 par deux vis de fixation 66. La pièce 64 est maintenue en contact par sa grande surface rectangulaire avec une platine secondaire 68 par une vis de fixation secondaire 70.

Par rapport à la direction du vecteur *̅u̅*̅, la pièce 64 est délimitée par une première surface inclinée 72 et par une seconde surface inclinée 74 (référencées sur la figure 7). Les surfaces inclinées 72 et 74 forment avec le vecteur *̅v̅*̅ deux angles opposés. Dans l'exemple illustré, l'angle formé par les surfaces inclinées 72 et 74 par rapport au vecteur *̅v̅*̅ est compris entre 2,8 ° et 3,2 ° en valeur absolue.

Le moyen 46 comporte une première paire de cales biaises comprenant une cale biaise 76 et une cale biaise 78. Les cales 76 et 78 sont identiques. En particulier, leur section par rapport à un plan de coupe perpendiculaire au vecteur *̅w̅*̅ est un trapèze rectangle. Les cales 76 et 78 comportent une surface inclinée 80 (référencée sur la figure 7) formant un angle par rapport au vecteur *̅v̅*̅ sensiblement égal à l'opposé de l'angle entre la surface inclinée 72 et le vecteur *̅v̅*̅.

Les cales 76 et 78 sont respectivement situées en face de deux perçages traversant 62. Chaque cale 76 et 78 peut se déplacer en translation selon la direction du vecteur *̅v̅*̅ par rapport au corps 54, grâce à quatre goupilles 82. Les goupilles 82 présentent avec les cales 76 et 78 un jeu suffisant pour que les cales 76 et 78 puissent aussi se déplacer en translation selon la direction du vecteur *̅u̅*̅ sur une largeur de débattement *Δu.*

Les cales 76 et 78 sont respectivement placées en face de deux orifices 62. Pour déplacer les cales 76 et 78, on utilise une vis de serrage (non représentée) dont le diamètre de tige et le filetage sont adaptées pour coopérer avec les perçages 62. En vissant la vis de serrage, on exerce une pression sur la cale biaise selon le sens et la direction du vecteur *̅v̅*̅. La cale biaise se déplace alors dans la direction du vecteur *̅v̅*̅ vers la platine 68. Par la coopération des surfaces inclinées 80 et 72, ce déplacement occasionne un autre déplacement de la cale biaise dans la direction du vecteur *̅u̅*̅ et en sens opposé à celui du vecteur *̅u̅*̅. Lorsque l'on dévisse la vis de serrage, la cale biaise est libre de se déplacer selon les déplacements opposés.

Le moyen 46 comprend une deuxième paire de cales biaises constituée d'une cale biaise 84 et d'une cale biaise 86 (non visible sur les figures). Les cales biaises 84 et 86 sont de conception identique aux cales 76 et 78, et sont mécaniquement reliées au corps principal de la même manière. Les cales 84 et 86 sont situés de l'autre côté des cales 76 et 78 par rapport au plan de symétrie P_{symétrie}.

Pour fixer le stator 29 sur le boîtier 4 en vue de la réalisation de l'ensemble solidaire (E), les moyens de fixation 46 sont initialement configurés comme illustré sur les figures 7 à 9. En d'autres termes, les cales 76, 78, 84 et 86 sont adjacentes à la platine 58.

Lorsque le stator est placé à l'intérieur de la portion 10, un opérateur introduit les moyens 46 dans les rainures des brides 22, 24, 26 et dans les rainures des brides 34, 36 et 38. Concernant le moyen 46 représenté sur les figures 7 à 9, le moyen 46 est inséré à l'intérieur d'une rainure de la bride 26 et d'une rainure de la bride 38. Plus précisément, les cales 76 et 84 sont introduites dans la rainure de la bride 26 tandis que les cales biaises 78 et 86 sont insérées dans la rainure de la bride 38.

L'opérateur introduit ensuite les vis de serrage dans les orifices 62. L'opérateur visse les vis de serrage. Les cales 76, 78, 84 et 86 se déplacent selon la direction et le sens du vecteur *̅v̅*̅ jusqu'à arriver en butée contre la platine 68. Grâce aux surfaces inclinées 72 et 80, les cales 76, 78, 84 et 86 se déplacent selon la direction du vecteur *̅u̅*̅ de sorte à s'éloigner du plan de symétrie du corps principal 54. En fait, les cales 76 et 78 se déplacent en sens opposé au sens du vecteur *̅u̅*̅ tandis que les cales 84 et 86 se déplacent dans le sens du vecteur *̅u̅*̅. On augmente ainsi l'épaisseur du moyen 46 selon la direction du vecteur *̅u̅*̅ d'une valeur pouvant atteindre 2**Δu.* Les cales 76 et 84 exercent alors un effort normal sur les parois de la rainure de la bride 26. Il se produit un effort tangentiel de friction fixant le moyen de fixation 46 au boîtier 4. De même, les cales 78 et 86 exercent un effort normal sur la rainure de la bride 38. L'effort de friction tangentiel apparaissant fixe le moyen 46 au stator 29. Grâce aux contacts des cales 76 et 84 avec la bride 26 et des cales 78 et 86 avec la bride 38, on ajuste un à un les moyens de fixation 46 de sorte à fixer le stator 29 sur le boîtier 4 en évitant l'hyperstatisme.

Pour démonter le moyen 46, l'opérateur n'a seulement qu'à effectuer les manipulations inverses. Les cales 76, 78, 84 et 86 retourneront dans leur position initiale telle qu'illustrée sur les figures 7 à 9. Le moyen 46 pourra alors être enlevé facilement.

Avec le propulseur 2, il est possible de réaliser l'ensemble solidaire (E) constitué notamment du boîtier 4 et du stator 29. Les moyens de fixation ponctuels réalisant l'ensemble (E) sont placés dans des endroits judicieusement choisis, à savoir sur des portions supérieures et inférieures des brides d'extrémité et sur des portions supérieures de la bride intermédiaire, et dans des secteurs angulaires précis autour de l'axe 12. De ce fait, la transmission des déformations et/ou des vibrations du boîtier 4 au stator 29 est rendue minimale. En outre, la réalisation de l'ensemble (E) est facilitée, il est possible de démonter l'ensemble (E) et de réajuster la robustesse de la liaison d'encastrement entre le stator 29 et le boîtier 4.

Ces avantages sont cruciaux dans de nombreux domaines d'application. Dans le domaine des propulseurs en nacelle, par exemple, on limite le risque d'une défaillance du moteur électrique, et il est possible de remplacer le stator indépendamment du boîtier, et vice versa, ou encore de resserrer le stator après un choc extrême.

Il va maintenant être détaillé un exemple de procédé pouvant être mis en oeuvre pour concevoir et fabriquer le propulseur 2.

Dans une première étape, on simule la déformation du propulseur 2 suite à un choc. En l'espèce, on simule l'apparition d'un choc sur une des faces latérales du boîtier 4. Pour mettre en oeuvre cette simulation, on utilise un modèle par éléments finis du propulseur 2.

Dans une seconde étape, on détermine, pour tout point du boîtier 4, la variation de la position relative de ce point par rapport à l'axe 12. De cette manière, on peut trouver une localisation de déformation minimale du boîtier cylindrique à la suite du choc simulé. Il est avantageux de comparer les variations de position relative par rapport à l'axe 12, car on tient compte d'un déplacement global du propulseur 2 de sorte que l'on identifie plus rapidement les localisations de déformation minimales. Dans l'exemple de réalisation illustré, on détermine dix localisations de déformation minimale. Quatre localisations de déformation minimale sont situées sur la bride 22, deux localisations de déformation minimale sont situées sur la bride 24 et deux localisations de déformation minimale sont situées sur la bride 26.

Dans une dernière étape du procédé, l'on place les moyens de fixation ponctuels 46 à chaque localisation de déformation minimale. Plus particulièrement, on pratique des rainures dans les brides 22, 24 et 26 aux localisations de déformation minimale. On pratique ensuite des rainures dans les brides 34, 36 et 38 dans des secteurs angulaires correspondant aux secteurs angulaires des localisations de déformation minimale. On place ensuite des moyens de fixation ponctuels dans les rainures pratiquées.

Au moyen du procédé qui vient d'être décrit, il est possible de concevoir et de fabriquer un ensemble solidaire présentant les avantages du propulseur 2.

## Revendications

1. Ensemble (E) comprenant un boîtier (4) et un stator (29) inséré à l'intérieur d'une cavité cylindrique dudit boîtier (4), ledit ensemble comprenant un moyen de fixation ponctuel (40, 46) du stator (29) par rapport au boîtier (4), ledit moyen de fixation ponctuel (46) comprenant un corps principal (54) et un système de cale biaise apte à solidariser de manière sélective le corps principal (54) avec le boîtier (4) et avec le stator (29), une base vectorielle orthonormale (56) constituée d'une direction (u), d'une direction (v) et d'une direction (w) étant attachée au corps principal (54), **caractérisé en ce que** ledit corps principal (54) comprend une platine (58) perpendiculaire à la direction (v) et une pièce à section trapézoïdale (64) dans un plan de coupe perpendiculaire à la direction (w), ledit moyen de fixation ponctuel (46) comprenant deux paires de cales biaises (76, 78, 84, 86) respectivement situées de part et d'autre d'un second plan de symétrie (P_{symétrie}) du corps principal (54) perpendiculaire à la direction (u), chaque cale biaise (76, 78, 84, 86) étant apte à se déplacer en translation par rapport au corps principal (54) selon une première direction (*̅v̅*̅) perpendiculaire au plan de la platine (58), la surface inclinée (80) de chaque cale biaise (76, 78, 84, 86) coopérant avec une surface inclinée (72, 74) de la pièce à section trapézoïdale (64) de telle sorte que le déplacement en translation selon la première direction (*̅v̅*̅) de ladite cale biaise (76, 78, 84, 86) par rapport au corps principal (54) dans un sens tendant à éloigner ladite cale biaise (76, 78, 84, 86) de la platine (58) occasionne un déplacement de la cale biaise (76, 78, 84, 86) en translation par rapport au corps principal (54) selon une seconde direction (*̅u̅*̅) perpendiculaire au second plan de symétrie (P_{symétrie}) dans un sens tendant à l'éloigner du second plan de symétrie (P_{symétrie}).

2. Ensemble (E) selon la revendication 1, dans lequel ledit moyen de fixation ponctuel (46) est apte à mettre en oeuvre un effort de maintien dirigé selon la direction radiale et/ou un effort de maintien dirigé selon la direction tangentielle.

3. Ensemble (E) selon la revendication 1 ou 2, comprenant en outre un premier plan de symétrie (I-I), ledit moyen de fixation ponctuel (46) étant localisé dans un secteur angulaire formant un angle compris entre 0 ° et 40 ° avec ledit premier plan de symétrie (I-I) ou dans un secteur angulaire formant un angle compris entre 140 ° et 180 ° avec ledit premier plan de symétrie (I-I).

4. Ensemble (E) selon la revendication 3, comprenant en outre au moins un boulon de pression (50) localisé dans un secteur angulaire formant un angle compris entre 1,5 ° et 6,5 ° avec ledit premier plan de symétrie (I-I), et au moins une surface de pression (52) localisée dans un secteur angulaire formant un angle compris entre 155 ° et 180 ° avec ledit premier plan de symétrie (I-I).

5. Ensemble (E) selon la revendication 3 ou 4, dans lequel le stator (29) comprend deux brides d'extrémité (34, 38) respectivement situées aux deux extrémités axiales du stator (29), ledit ensemble (E) comprenant, pour chaque bride d'extrémité (34, 38) du stator, un premier moyen de fixation ponctuel (46) localisé dans un secteur angulaire formant un angle compris entre 0 ° et 40 ° avec ledit premier plan de symétrie (I-I), un deuxième moyen de fixation ponctuel (46) localisé pour être le symétrique du premier moyen de fixation ponctuel (46) par rapport au premier plan de symétrie (I-I), un troisième moyen de fixation ponctuel (46) localisé dans un secteur angulaire formant un angle compris entre 140 ° et 180 ° avec ledit premier plan de symétrie (I-I), et un quatrième moyen de fixation ponctuel (46) localisé pour être le symétrique du troisième moyen de fixation ponctuel (46) par rapport au premier plan de symétrie (I-I).

6. Ensemble (E) selon la revendication 5, dans lequel le stator (29) comprend au moins une bride intermédiaire (36) axialement située entre les brides d'extrémité (34, 38), ledit ensemble (E) comprenant, pour chaque bride intermédiaire (36) du stator (29), un premier moyen de fixation ponctuel (46) localisé dans un secteur angulaire formant un angle compris entre 0 ° et 40 ° avec ledit premier plan de symétrie (I-I) et un deuxième moyen de fixation ponctuel (46) localisé pour être le symétrique du premier moyen de fixation ponctuel (46) par rapport au premier plan de symétrie (I-I).

7. Ensemble (E) selon la revendication 6, dans lequel, pour chaque cale biaise (76, 78, 84, 86), le déplacement de ladite cale biaise (76, 78, 84, 86) par rapport au corps principal (54) est mis en oeuvre au moyen d'une vis de serrage respective.

8. Procédé dans lequel on simule la déformation du boîtier d'un ensemble (E) selon l'une quelconque des revendications 1 à 7, ladite simulation (E) étant mise en oeuvre au moyen d'un modèle par éléments finis, l'on détermine au moins une localisation de déformation minimale du boîtier (4), et l'on place le moyen de fixation ponctuel (46) à ladite localisation de déformation minimale.

## Patentansprüche

1. Anordnung (E), die ein Gehäuse (4) und einen Stator (29) umfasst, der in einen zylindrischen Hohlraum des Gehäuses (4) eingesetzt ist, wobei die Anordnung ein Mittel zur punktuellen Befestigung (40, 46) des Stators (29) in Bezug auf das Gehäuse (4) umfasst, wobei das punktuelle Befestigungsmittel (46) einen Hauptkörper (54) und ein Schrägkeilsystem umfasst, das in der Lage ist, den Hauptkörper (54) selektiv fest mit dem Gehäuse (4) und mit dem Stator (29) zu verbinden, wobei dem Hauptkörper (54) eine orthonormale Vektorbasis (56), die aus einer Richtung (u), einer Richtung (v) und einer Richtung (w) besteht, zugeordnet ist,
**dadurch gekennzeichnet, dass** der Hauptkörper (54) eine zur Richtung (v) senkrechte Platte (58) und ein Teil mit trapezförmigem Querschnitt (64) in einer Schnittebene senkrecht zur Richtung (w) umfasst, wobei das punktuelle Befestigungsmittel (46) zwei Schrägkeilpaare (76, 78, 84, 86) umfasst, die sich jeweils zu den beiden Seiten einer zweiten Symmetrieebene (P_{symmetrie}) des Hauptkörpers (54) senkrecht zur Richtung (u) befinden, wobei jeder Schrägkeil (76, 78, 84, 86) in der Lage ist, sich in Bezug auf den Hauptkörper (54) in einer ersten Richtung (*̅v̅*̅) senkrecht zur Ebene der Platte (58) zu verschieben, wobei die geneigte Fläche (80) jedes Schrägkeils (76, 78, 84, 86) so mit einer geneigten Fläche (72, 74) des Teils mit trapezförmigem Querschnitt (64) zusammenwirkt, dass die Verschiebung in der ersten Richtung (*̅v̅*̅) des Schrägkeils (76, 78, 84, 86) in Bezug auf den Hauptkörper (54) in einer sich von dem Schrägkeil (76, 78, 84, 86) der Platte (58) entfernenden Richtung eine Verschiebung des Schrägkeils (76, 78, 84, 86) in Bezug auf den Hauptkörper (54) in einer zweiten Richtung (*̅u̅*̅) senkrecht zur zweiten Symmetrieebene (P_{symmetrie}) in einer sich von der zweiten Symmetrieebene (P_{symmetrie}) entfernenden Richtung bewirkt.

2. Anordnung (E) nach Anspruch 1, wobei das punktuelle Befestigungsmittel (46) in der Lage ist, eine in der radialen Richtung gerichtete Haltekraft und/oder eine in der tangentialen Richtung gerichtete Haltekraft auszuüben.

3. Anordnung (E) nach Anspruch 1 oder 2, die weiter eine erste Symmetrieebene (I-I) umfasst, wobei das punktuelle Befestigungsmittel (46) in einem Winkelsektor angeordnet ist, der einen Winkel im Bereich zwischen 0 ° und 40 ° mit der ersten Symmetrieebene (I-I) bildet, oder in einem Winkelsektor, der einen Winkel in Bereich zwischen 140 ° und 180 ° mit der ersten Symmetrieebene (I-I) bildet.

4. Anordnung (E) nach Anspruch 3, die weiter mindestens einen Druckbolzen (50), der in einem Winkelsektor angeordnet ist, der einen Winkel im Bereich zwischen 1,5 ° und 6,5 ° mit der ersten Symmetrieebene (I-I) bildet, und mindestens eine Druckfläche (52) umfasst, die in einem Winkelsektor angeordnet ist, der einen Winkel im Bereich zwischen 155 ° und 180 ° mit der ersten Symmetrieebene (I-I) bildet.

5. Anordnung (E) nach Anspruch 3 oder 4, wobei der Stator (29) zwei Endflansche (34, 38) umfasst, die sich jeweils an den zwei axialen Enden des Stators (29) befinden, wobei die Anordnung (E) für jeden Endflansch (34, 38) des Stators ein erstes punktuelles Befestigungsmittel (46), das in einem Winkelsektor angeordnet ist, der einen Winkel im Bereich zwischen 0 ° und 40 ° mit der ersten Symmetrieebene (I-I) bildet, ein zweites punktuelles Befestigungsmittel (46), das so angeordnet ist, dass es in Bezug auf die erste Symmetrieebene (I-I) zum ersten punktuellen Befestigungsmittel(46) symmetrisch ist, ein drittes punktuelles Befestigungsmittel (46), das in einem Winkelsektor angeordnet ist, der einen Winkel im Bereich zwischen 140 ° und 180 ° mit der ersten Symmetrieebene (I-I) bildet, und ein viertes punktuelles Befestigungsmittel (46) umfasst, das so angeordnet ist, dass es in Bezug auf die erste Symmetrieebene (I-I) zum dritten punktuellen Befestigungsmittel (46) symmetrisch ist.

6. Anordnung (E) nach Anspruch 5, wobei der Stator (29) mindestens einen Zwischenflansch (36) umfasst, der sich axial zwischen den Endflanschen (34, 38) befindet, wobei die Anordnung (E) für jeden Zwischenflansch (36) des Stators (29) ein erstes punktuelles Befestigungsmittel (46), das in einem Winkelsektor angeordnet ist, der einen Winkel im Bereich zwischen 0 ° und 40 ° mit der ersten Symmetrieebene (I-I) bildet, und ein zweites punktuelles Befestigungsmittel (46) umfasst, das so angeordnet ist, dass es in Bezug auf die erste Symmetrieebene (I-I) zum ersten punktuellen Befestigungsmittel(46) symmetrisch ist.

7. Anordnung (E) nach Anspruch 6, wobei, bei jedem Schrägkeil (76, 78, 84, 86) die Bewegung des Schrägkeils (76, 78, 84, 86) in Bezug auf den Hauptkörper (54) mittels einer jeweiligen Spannschraube durchgeführt wird.

8. Verfahren, bei dem die Verformung des Gehäuses einer Anordnung (E) nach einem der Ansprüche 1 bis 7 simuliert wird, wobei die Simulation (E) mittels eines Finite-Elemente-Modells durchgeführt wird, mindestens eine Stelle minimaler Verformung des Gehäuses (4) bestimmt wird und das punktuelle Befestigungsmittel (46) an der Stelle minimaler Verformung platziert wird.

## Claims

1. Assembly (E) comprising a housing (4) and a stator (29) inserted inside a cylindrical cavity of said housing (4), said assembly comprising a means for point-to-point attachment (40, 46) of the stator (29) to the housing (4), said means for point-to-point attachment (46) comprises a main body (54) and a taper washer system capable of selectively rigidly connecting the main body (54) to the housing (4) and to the stator (29), an orthonormal vector basis (56) consisting of a first direction (v), a second direction ( 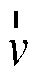 ),and a third direction ( 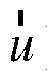 ) being attached to the main body (54), **characterized in that** said main body (54) comprises a plate (58) in a and a part (64) having a trapezoidal cross-section in a cutting plane perpendicular to the third direction ( 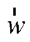 ), said means for point-to-point attachment (46) comprising two pairs of taper washers (76, 78, 84, 86) respectively located on either side of a second plane of symmetry (P_{symmetry}) of the main body (54) perpendicular to the second direction direction ( 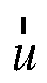 ), each taper washer (76, 78, 84, 86) being capable of moving in translation with respect to the main body (54) according to a first direction ( 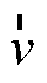 ) perpendicular to the plane of the plate (58), the inclined surface (80) of each taper washer (76, 78, 84, 86) cooperating with an inclined surface (72, 74) of the part (64) having a trapezoidal cross-section in such a way that the movement in translation according to the first direction ( 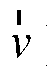 ) of said taper washer (76, 78, 84, 86) with respect to the main body (54) in a direction tending to move said taper washer (76, 78, 84, 86) away from the plate (58) causes a movement of the taper washer (76, 78, 84, 86) in translation with respect to the main body (54) according to a second direction ( 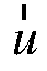 ) perpendicular to the second plane of symmetry (P_{symmetry}) in a direction tending to move it away from the second plane of symmetry (P_{symmetry}).

2. Assembly (E) according to claim 1, wherein said means for point-to-point attachment (46) is capable of implementing a maintaining stress directed according to the radial orientation and/or a maintaining stress directed according to the tangential orientation.

3. Assembly (E) according to claim 1 or 2, further comprising a first plane of symmetry (I-I), said means for point-to-point attachment (46) being located in an angular sector forming an angle of between 0° and 40° with said first plane of symmetry (I-I) or in an angular sector forming an angle of between 140° and 180° with said first plane of symmetry (I-I).

4. Assembly (E) according to claim 3, further comprising at least one pressure bolt (50) located in an angular sector forming an angle of between 1.5° and 6.5° with said first plane of symmetry (I-I), and at least one pressure surface (52) located in an angular sector forming an angle of between 155° and 180° with said first plane of symmetry (I-I).

5. Assembly (E) according to claim 3 or 4, wherein the stator (29) comprises two end flanges (34, 38) respectively located at the two axial ends of the stator (29), said assembly (E) comprising, for each end flange (34, 38) of the stator, a first means for point-to-point attachment (46) located in an angular sector forming an angle of between 0° and 40° with said first plane of symmetry (I-I), a second means for point-to-point attachment (46) located to be symmetrical to the first means for point-to-point attachment (46) with respect to the first plane of symmetry (I-I), a third means for point-to-point attachment (46) located in an angular sector forming an angle of between 140° and 180° with said first plane of symmetry (I-I), and a fourth means for point-to-point attachment (46) located to be symmetrical to the third means for point-to-point attachment (46) with respect to the first plane of symmetry (I-I).

6. Assembly (E) according to claim 5, wherein the stator (29) comprises at least one intermediate flange (36) axially located between the end flanges (34, 38), said assembly (E) comprising, for each intermediate flange (36) of the stator (29), a first means for point-to-point attachment (46) located in an angular sector forming an angle of between 0° and 40° with said first plane of symmetry (I-I) and a second means for point-to-point attachment (46) located to be symmetrical to the first means for point-to-point attachment (46) with respect to the first plane of symmetry (I-I).

7. Assembly (E) according to claim 8, wherein for each taper washer (76, 78, 84, 86), the movement of said taper washer (76, 78, 84, 86) with respect to the main body (54) is implemented via a respective clamping screw.

8. Method wherein the deformation of the housing of an assembly (E) according to any one of claims 1 to 9 is simulated, said simulation (E) being implemented via a finite-elements model, at least one location of minimal deformation of the housing (4) is determined, and the means for point-to-point attachment (46) is placed at said location of minimal deformation.
